# EUROPÄISCHE PATENTSCHRIFT

(11) **EP 0 490 866 B1**
(45) Veröffentlichungstag und Bekanntmachung des Hinweises auf die Patenterteilung: **05.07.1995**
(21) Anmeldenummer: 91890251.1
(22) Anmeldetag: 23.10.1991
(51) Int. Cl.: G01D 5/38

(54) **Drehgeber**
Shaft encoder
Avertisseur synchron

(30) Priorität: 10.12.1990 AT 2496/90
(43) Veröffentlichungstag der Anmeldung: 17.06.1992
(73) Patentinhaber: SENTOP Ges.m.b.H., 5121 Ostermiething (AT)
(72) Erfinder: Rieder, Heinz, A-5110 Oberndorf (AT); Schwaiger, Max, A-5121 Ostermiething (AT)
(74) Vertreter: Hübscher, Heiner, Dipl.-Ing.

(56) Entgegenhaltungen:
- DE-B- 1 623 789
- US-A- 3 974 379

## Beschreibung

Die Erfindung betrifft einen Drehgeber mit einer Geberscheibe, die jeweils zwei Kreis-Meßteilungen, trägt, mit zugeordneten optoelektronischen Abtasteinheiten, die im Auflichtverfahren zur Erzeugung von/ Meßsignalen abtasten.

Derartige Drehgeber werden unter anderem bei Werkzeugmaschinen, z. B. Drehbänken, und auf Fertigungsautomaten verwendet. Dabei wird vorzugsweise die Geberscheibe direkt auf einer Hauptspindel der zugeordneten Maschine montiert, also in die Maschine integriert und nicht als Bestandteil eines eigenen Meßgerätes ausgeführt, dessen Welle nur dem Antrieb der Geberscheibe dient und mit einer Hauptwelle möglichst genau fluchtend gekuppelt werden muß. Nach einer möglichen Ausführungsform besitzt die eine Meßteilung eine sehr feine Teilungskonstante, z. B. in der Größenordnung von 18.000 Teilstrichen bzw. Inkrementen aus Hell- und Dunkelfeldern, wobei hier Messungen bis in einen höheren Drehzahlbereich von z. B. 12.000 U/min vorgenommen werden und aus der Abtastung dieser Meßteilung erhaltene Signale für die Überwachung der Motordrehzahl und des Gleichlaufes bei der Bearbeitung Verwendung finden können. Zusatzmarken neben der Hauptmeßteilung, die ebenfalls abgetastet werden, können bestimmten Drehwinkelpositionen zugeordnet werden und z. B. für die Erzeugung von Synchronisierimpulsen Verwendung finden. Eine zweite Meßteilung mit gröberer Teilung, deren Teilungsfaktor vorzugsweise mit 2ⁿ, z. B. 2¹⁰ = 1024, festgelegt ist, ermöglicht die Erzeugung von drehwinkelabhängigen Steuersignalen, wie sie z. B. für das Gewindeschneiden benötigt werden. Mit der feinen Teilung wird es auch möglich, bestimmte Winkelpositionen der Spindel etwa beim Fräsen auf einer Drehbank einzustellen.

Bei in eigene, mit einer Hauptwelle zu kuppelnde Meßgeräte integrierten Geberscheiben ist es bekannt, die Geberscheibe wenigstens im Bereich der Meßteilungen durchsichtig auszubilden und die Meßteilungen in zwei konzentrischen Spuren an den Stirnseiten der Scheibe anzubringen, wobei sich zwangsweise eine Keilform der Striche bzw. der zwischen ihnen verbleibenden Leerfelder der Inkrementalteilung wegen der radialen Anordnung dieser Striche ergibt. Derartige Meßteilungen können im Durchlichtverfahren mit an der einen Seite der Geberscheibe angeordneten Beleuchtungseinrichtung und an der anderen Seite vorgesehenen Abtasteinheiten, meist Photoelemente mit vorgeordneten Abtastgittern für die Meßteilung, abgetastet werden. Es ist möglich, die Meßteilung in einem photographischen oder photolithographischen Verfahren unter Verwendung von Exponiermasken herzustellen, so daß die Herstellungskosten in tragbaren Grenzen bleiben. Die Anordnung der Geberscheibe in einem eigenen Meßgerät, dessen Welle mit der Spindel od. dgl. der Werkzeugmaschine möglichst fluchtend gekuppelt werden muß, ist notwendig, da derartig aufgebaute Drehgeber wegen der Keilform der Teilungselemente sehr empfindlich gegen Rundlauffehler sind, wobei bei dem gewählten Ausführungsbeispiel von 18.000 Inkrementen eine Rundlaufgenauigkeit in der Größenordnung von 1 »m notwendig ist, wenn bei vernünftigem Durchmesser der Geberscheibe brauchbare Meßsignale erhalten werden sollen. Bei größeren Rundlaufabweichungen kommt es wegen der erwähnten Keilform der Teilungsinkremente zu unerwünschten Änderungen in der Signalform der Abtastsignale (Pumpen der Abtastsignale), so daß diese für Meß-, Positionier- und Steuerzwecke unbrauchbar werden können. Um hier wenigstens teilweise Abhilfe zu schaffen, ist nach der US-A 3 974 379 vorgesehen, die Geberscheibe in Form eines Kreisringes aus dünnem, elastischem Filmmaterial herzustellen, mit ihrem inneren Randbereich zwischen zwei Metallscheiben, die auf der Spindel sitzen, einzuklemmen und anschließend an diesen Klemmbereich eine Randausnehmung in der einen Scheibe vorzusehen, in die eine ebenfalls aus einem Film bestehende Abtastplatte der optoelektronischen Ableseeinheit gleitend eingreift, wobei diese Abtastplatte mit ihrem über den Rand der Geberscheibe vorstehenden Randbereich axial versetzt gegenüber dem Klemmspalt der beiden festen Scheiben festgeklemmt wird, so daß der über die festen Scheiben überstehende Bereich der Geberscheibe im Abtastbereich aus der Normalposition abgelenkt wird und eine bleibende Anlage von Abtastplatte und Geberscheibe gewährleistet bleibt. Die Konstruktion ist aufwendig und führt zu einer Dauerbelastung der Geberscheibe, wobei sich trotzdem bei Exzentrizitäten geringe Verschiebungen der Geberscheibe zur Abtastplatte ergeben.

Geberscheiben, die an sich eine größere Rundlaufabweichungstoleranz ergeben, sind bisher als zylindrische Trommeln ausgeführt, die auf ihrem Zylindermantel die beiden Meßteilungen tragen, welche von zugeordneten Abtasteinheiten im Auflichtverfahren abgetastet werden, wobei das von der reflektierenden Inkrementalteilung reflektierte Licht durch Abtastgitter auf fotoelektrische Empfänger fällt. Der Nachteil dieser bekannten Drehgeber besteht darin, daß bisher die Meßteilungen für jede Geberscheibe im Original auf der Scheibe hergestellt werden müssen, so daß sich zumindest bei genaueren Teilungen sehr hohe Herstellungskosten ergeben. Bereits geringste Durchmessertoleranzen bei den Geberscheiben bedingen Umfangsänderungen der die Meßteilungen tragenden Zylinderflächen, die die Herstellung einer neuen Teilung notwendig machen. Abgesehen davon ist derzeit kein Verfahren bekannt, das eine Aufbringung einer Meßteilung im Kontaktkopierverfahren auf eine zylindrische Außenfläche ermöglichen würde.

Aus der DE-B 1 623 789 ist ein Drehgeber bekannt, bei dem die Meßteilung von einem einem Polygon folgenden Mantel eines Prismas gebildet wird, wobei jede Seite des Polygons ein Inkrement der Meßteilung darstellt. Die Abtastung erfolgt in der Weise, daß Licht durch einen Raster hindurch auf das sich bei der Messung drehende Polygon geworfen und mit reflektiertem Licht von einem feststehenden Raster verglichen wird. Zur Vermeidung bzw. Verringerung des durch Phasenschwingungen verursachten Fehlers werden über ein ein Meß-Lichtbündel spaltendes System zwei räumlich getrennte und gegeneinander umgekehrte Bilder des feststehenden Rasters am drehenden Polygon erzeugt, wobei im Lichtweg hinter dem Polygon lichtempfindliche Elemente zum Empfang der erwähnten Teilbilder vorgesehen sind, so daß durch elektrische Schaltungen Phasenschwingungen unterdrückt werden können. Diese Art der Abtastung ist gegenüber der beschriebenen, einfachen Art der optoelektronischen Abtastung mit Abtastgitter und Empfänger aufwendig und setzt auch aufwendige Empfängerschaltungen voraus, wobei sich zusätzlich ein erhöhter Platzbedarf ergibt.

Aufgabe der Erfindung ist die Schaffung eines Drehgebers der eingangs genannten Art, der eine relativ große Rundlauftoleranz aufweist und bei dem trotzdem die Meßteilung einfach und genau hergestellt werden kann.

Die gestellte Aufgabe wird bei einem Drehgeber der eingangs genannten Art erfindungsgemäß dadurch gelöst, daß die Geberscheibe wenigstens eine konzentrische Kegelstumpfmantelfläche aufweist, auf der die Meßteilungen angebracht sind.

Die Meßteilungen können im Kopierverfahren angebracht werden, wobei Durchmessertoleranzen der Geberscheibe keine Rolle spielen, da die Meßteilungen jeweils auf genau vorgegebenen

Durchmesserbereichen angebracht werden und für die Meßgenauigkeit der Abstand der Seitenränder der Meßteilungen von den Rändern der Kegelstumpfmantelflächen keine Rolle spielt. Es sind lediglich die Abtasteinheiten auf die Meßteilungen auszurichten. Zusätzlich zu der Erleichterung der Herstellung der Meßteilungen, die mit hoher Genauigkeit von den Exponiermasken übernommen werden können, hat die erfindungsgemäße Ausführung den Vorteil, daß sie gegenüber den Drehgebern mit auf einem zylindrischen Mantel angebrachten Teilungen eine gedrängtere Bauweise zuläßt, wenn bei der Abtastung im Auflichtverfahren ein entsprechender Reflexionswinkel zwischen Beleuchtungseinrichtung und Abtastgitter mit den photoelektrischen Empfängern einzuhalten ist. Auch die relative Führung von Abtasteinheit und Geberscheibe kann vereinfacht und verbessert werden. Hier besteht eine bevorzugte Ausführungsform darin, daß die Geberscheibe zwei oder mehrere Kegelstumpfmantelflächen, aufweist, die gegengleich sind und nach außen abfallen, so daß auch die zugeordneten Abtasteinheiten um die auf die Drehachse der Geberscheibe normale Ebene symmetrisch angeordnet werden können.

Der Scheitelwinkel des die Kegelstumpfmantelflächen geometrisch bestimmenden, gedachten Kegels richtet sich nach den jeweiligen Gesamtbedingungen. Je feiner die Meßteilungen werden, desto spitzer wird man diesen Scheitelwinkel wählen. Anderseits kann ein größerer Scheitelwinkel zur Erzielung einer ausreichenden Neigung der Reflexionsflächen der Meßteilungen zwischen Beleuchtungseinrichtung und Abtasteinheit von Vorteil sein. Bei einer Herstellung der Meßteilungen im Kontaktkopierverfahren sollte der halbe Scheitelwinkel kleiner als der Reibungswinkel zwischen Exponiermaske und der belichtungsempfindlich gemachten Kegelstumpfmantelfläche sein, um ein Festklemmen der Maske bei der Exponierung zu verhindern. In der Praxis beträgt der Scheitelwinkel des die Kegelstumpfmantelflächen bestimmenden gedachten Kegels zwischen 15° und 120°.

Ein bevorzugten Verfahren zur Herstellung von Drehgeberscheiben für die erfindungsgemäßen Drehgeber besteht darin, daß die Meßteilungen in eine photographischen z. B. photolithographischen Kopierverfahren angebracht werden, bei dem auf die wenigstens im Bereich der Kegelstumpfmantelflächen mit einer photoempfindlichen Beschichtung versehenen Drehgeberscheiben für den Exponiervorgang die Meßteilung bestimmende, hohlkegelige Exponiermasken aufgesetzt werden. Diese Exponiermasken lassen sich bei übereinstimmenden Kegelwinkeln auf den Kegelstumpfmantelflächen exakt bezüglich der Scheibenachse zentrieren.

Die Erfindung wird anhand des folgenden Ausführungsbeispiels näher erläutert.

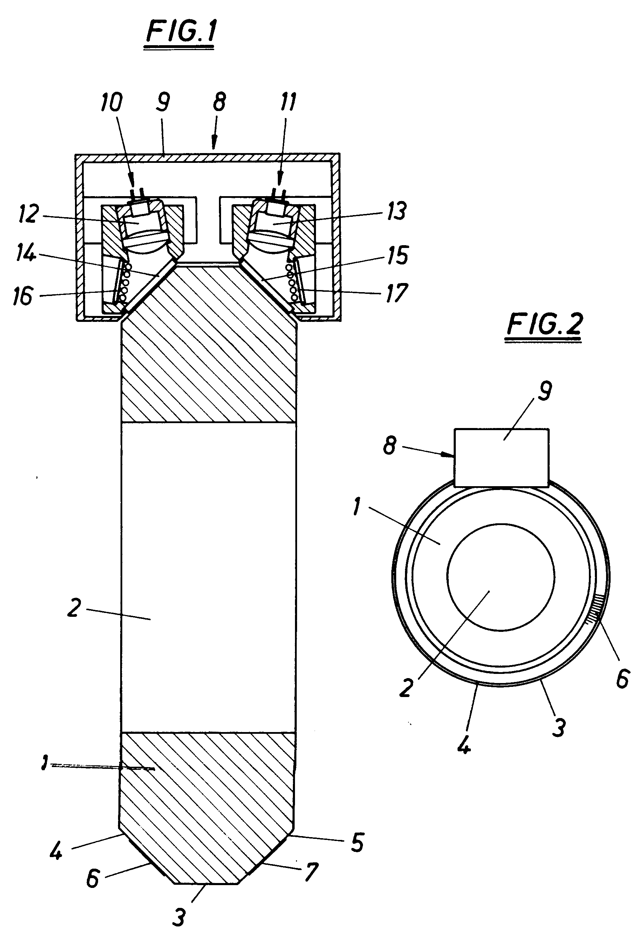

In der Zeichnung ist der Erfindungsgegenstand beispielsweise veranschaulicht. Es zeigen
- Fig. 1: einen erfindungsgemäßen Drehgeber schematisiert im axialen Mittelschnitt und
- Fig. 2: den Drehgeber nach Fig. 1 in Ansicht.

Der Drehgeber besitzt eine Drehgeberscheibe 1, die in Form eines Ringes ausgebildet ist und eine konzentrische Bohrung 2 aufweist, mit der sie drehfest auf einer Welle oder Spindel einer Werkzeugmaschine befestigt werden kann. Die Drehgeberscheibe 1 kann aus Stahl hergestellt werden. Wie aus der Zeichnung ersichtlich ist, besitzt die Geberscheibe 1 einen zylindrischen Außenmantel 3, von dem gegengleich Kegelstumpfmantelflächen 4, 5 nach außen abfallen. Auf diesen Flächen 4 und 5 sind außenseitig Meßteilungen 6, 7 angebracht, wobei die eine Meßteilung eine Feinteilung von z. B. 18.000 über den Umfang gleichmäßig verteilten Strichen und die andere Teilung eine 2ⁿ Striche, z. B. 1024 Striche aufweisende Teilung sein kann. Für die Herstellung der Meßteiwerden die Flächen 4, 5 mit einer photoempfindlichen Beschichtung versehen oder durch andere bekannte Verfahren für die Belichtung gegen ein Strahlungsmuster empfindlich gemacht. Dann wird auf die jeweils zu exponierende Fläche 4 bzw. 5 eine die Meßteilung (6) bestimmende Exponiermaske aufgesetzt, die gegengleich zu den Flächen 4 bzw. 5 eine mit der zu kopierenden Teilung versehene hohlkegelige Fläche aufweist. Durch das Zusammenwirken der beiden Kegel und entsprechende Ausrichtung der Exponiermaske gegenüber der Scheibe 1 werden die Meßteilungen konzentrisch zur Mittelachse auf den Flächen 4 bzw. 5 exponiert. In der nachfolgenden, an sich bekannten Entwicklung wird die Teilung in Form von reflektierenden Strichen, die durch nicht reflektierende Bereiche getrennt sind, sichtbar gemacht.

Für die Geberscheibe 1 ist ein Abtastkopf 8 mit einem Gehäuse 9 vorgesehen. In diesem Gehäuse 9 sind zwei Abtasteinheiten für die beiden Meßteilungen 6 bzw. 7 untergebracht. Jede dieser Abtasteinheiten 10 bzw. 11 besitzt eine Beleuchtungseinrichtung mit z. B. als Photodioden 12 bzw. 13 mit nachgeordneter Optik ausgebildeten Lichtquellen, eine über die Meßteilung 6 bzw. 7 reichende Abtastplatte 14 bzw. 15 und eine Empfängerplatine 16 bzw. 17 mit photoelektrischen Empfängern, die das von der Meßteilung 6 bzw. 7 durch das Abtastgitter 14 bzw. 15 reflektierte Licht empfangen und in elektrische Meß- bzw. Steuersignale umwandeln. Diese Signalerzeugung und die verschiedenen Verwendungsarten für die erzeugten Signale sind allgemeiner Stand der Technik und werden daher nicht näher beschrieben. Bei einem Drehgeber der dargestellten Art sind bei einem mittleren Durchmesser der Meßteilungen 6 bzw. 7 von 150 mm, einer Feinteilung von 18.000 Strichen bei der Meßteilung 6 und einer Teilung von 1024 Strichen bei der Meßteilung 7 Abweichungen im Rundlauf der Antriebswelle von 25 »m zulässig, ohne daß die Signalqualität leidet.

Die bei dem weiter oben beschriebenen Herstellungsverfahren verwendeten Exponiermasken können eine etwa der Ansicht der Abtastplatten 14, 15 entsprechende, holkegelige Querschnittsform aufweisen, wobei auf der Kegelmantelfläche die MutterMeßteilung angebracht ist. Nach einer anderen Möglichkeit lassen sich auch Exponiermasken verwenden, die optische Prismen, z. B. die Scheiben 1 zu einem vollen Zylinderring ergänze Ringe in Form von Dreiseitprismen mit innerer Kegelmantelfläche bilden.

## Patentansprüche

1. Drehgeber mit einer Geberscheibe (1), die jeweils zwei Kreis-Meßteilungen (6, 7) trägt, mit zugeordneten optoelektronischen Atasteinheiten (10, 11), die im Auflichtverfahren zur Erzeugung von Meßsignalen abtasten, dadurch gekennzeichnet, daß die Geberscheibe (1) zumindest eine konzentrische Kegelstumpfmantelfläche (4, 5) aufweist, auf der die Meßteilungen (6, 7) aufgebracht sind.

2. Drehgeber nach Anspruch 1, dadurch gekennzeichnet, daß die Geberscheibe (1) zwei oder mehrere Kegelstumpfmantelflächen (4, 5) aufweist, die gegengleich sind und nach außen abfallen.

3. Drehgeber nach Anspruch 1 oder 2, dadurch gekennzeichnet, daß der Scheitelwinkel des die Kegelstumpfmantelflächen (4, 5) geometrisch bestimmenden, gedachten Kegels 15° bis 120° beträgt.

4. Verfahren zur Herstellung von Drehgeberscheiben (1) für Drehgeber nach einem der Ansprüche 1 bis 3, dadurch gekennzeichnet, daß die Meßteilungen (6, 7) in einem photographischen, z. B. photolithographischen Kopierverfahren angebracht werden, bei dem auf die wenigstens im Bereich der Kegelstumpfmantelflächen (4, 5) mit einer photoempfindlichen Beschichtung versehenen Drehgeberscheiben (1) für den Exponiervorgang die Meßteilung (6, 7) bestimmende, hohlkegelige Exponiermasken aufgesetzt werden.

## Claims

1. A selsyn comprising a transmitter disc (1) bearing two circular graduated scales (6, 7) and with associated opto-electronic scanning units (10, 11) which scan in an incident-light process for generating test signals, characterised in that the transmitter disc (1) has at least one concentric frustoconical surface (4, 5) on which the scales (6, 7) are formed.

2. A selsyn according to claim 1, characterised in that the transmitter disc (1) has two or more frustoconical surfaces (4, 5) which are diametrically opposed and slope off outwardly.

3. A selsyn according to claim 1 or 2, characterised in that the vertex angle of the imaginary cone which geometrically defines the frustoconical surfaces (4, 5) is 15° to 120°.

4. A method of producing transmitter discs (1) for selsyns according to any one of claims 1 to 3, characterised in that the calibrated scales (6, 7) are formed by a photographic, e.g. photolithographic copying process in which hollow conical exposure masks defining the scale (6, 7) for the exposure process are placed on the transmitter discs (1), which are provided with a photosensitive coating at least in the region of the frustoconical surfaces (4, 5).

## Revendications

1. Capteur de rotation, avec un disque de capteur (1), portant respectivement deux graduations de mesure (6, 7) circulaires, avec des unités d'exploration (10, 11) électroniques associées, effectuant une exploration suivant un procédé à lumière incidente, en vue de produire des signaux de mesure,
caractérisé en ce que le disque de capteur (1) présente au moins une surface d'enveloppe (4, 5) tronconique concentrique, sur laquelle sont appliquées les graduations de mesure (6, 7).

2. Capteur de rotation selon la revendication 1, caractérisé en ce que le disque de capteur (1) présente deux surfaces d'enveloppe (4, 5) tronconiques, ou plus, répondant à une symétrie spéculaire et dont les pointes de cône sont situées à l'extérieur.

3. Capteur de rotation selon la revendication 1 ou 2,
caractérisé en ce que l'angle au sommet du cône imaginaire, déterminant géométriquement les deux surfaces d'enveloppe (4, 5) tronconiques est dans la plage allant de 15° à 120°.

4. Procédé de fabrication de disques de capteur de rotation (1), selon l'une des revendications 1 à 3,
caractérisé en ce que les graduations de mesure (6, 7) sont appliquées selon un procédé de copiage photographique, par exemple photolithographique, lors duquel, sur les disques de capteur de rotation (1) , pourvus, au moins dans la zone des surfaces d'enveloppe (4, 5) tronconiques, d'un revêtement photosensible, sont appliqués pour le processus d'exposition des masques d'exposition coniques creux, déterminant la graduations de mesure (6, 7).
